(19) Europäisches Patentamt
European Patent Office
Office européen des brevets

(11) **EP 1 881 415 B1**

(12) **EUROPEAN PATENT SPECIFICATION**

(45) Date of publication and mention
of the grant of the patent:
**28.04.2010 Bulletin 2010/17**

(51) Int Cl.:
***G06F 17/14*** *(2006.01)*

(21) Application number: **06388052.0**

(22) Date of filing: **18.07.2006**

(54) **Folding of input data values to a transform function**

Faltung von Eingabedatenwerten für eine Transformation

Pliage de valeurs de données d'entrée pour une transformée

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.01.2008 Bulletin 2008/04**

(73) Proprietor: **Telefonaktiebolaget LM Ericsson (publ)**
**164 83 Stockholm (SE)**

(72) Inventors:
• **Svensson, Jim**
**372 30 Ronneby (SE)**
• **Wilhelmsson, Leif**
**240 10 Dalby (SE)**
• **Olsson, Thomas**
**374 37 Karlshamn (SE)**

(74) Representative: **Boesen, Johnny Peder et al**
**Zacco Denmark A/S**
**Hans Bekkevolds Allé 7**
**2900 Hellerup (DK)**

(56) References cited:
**WO-A-01/78290**     **WO-A-2005/008516**
**WO-A-2005/079033**

• **ALASTI H ET AL: "A discrete multi carrier multiple access technique for wireless communications" VEHICULAR TECHNOLOGY CONFERENCE, 1998. VTC 98. 48TH IEEE OTTAWA, ONT., CANADA 18-21 MAY 1998, NEW YORK, NY, USA, IEEE, US, vol. 2, 18 May 1998 (1998-05-18), pages 1533-1537, XP010288028 ISBN: 0-7803-4320-4**
• **HE S ET AL: "VLSI computation of the partial DFT for (de)modulation in multi-channel OFDM system" PROCEEDINGS OF SIXTH IEEE INTERNATIONAL SYMPOSIUM ON PERSONAL, INDOOR AND MOBILE RADIO COMMUNICATIONS 1995 (PIMRC'95), 27-29 SEPTEMBER 1995, vol. 3, 27 September 1995 (1995-09-27), pages 1257-1261, XP002441474**
• **HE S ET AL: "Computing Partial DFT for Comb Spectrum Evaluation" IEEE SIGNAL PROCESSING LETTERS, vol. 3, no. 6, June 1996 (1996-06), pages 173-175, XP011059857 ISSN: 1070-9908**
• **SINGH S ET AL: "Architecturally efficient FFT pruning algorithm" ELECTRONICS LETTERS, vol. 41, no. 23, 10 November 2005 (2005-11-10), pages 1305-1306, XP006025601 ISSN: 0013-5194**
• **KHAN Z A ET AL: "Fast computation of partial DFT for comb spectrum evaluation" IEEE SIGNAL PROCESSING LETTERS, vol. 13, no. 12, December 2006 (2006-12), pages 721-724, XP002441475**

**EP 1 881 415 B1**

**Description**

Technical Field of the Invention

The invention relates to a method of processing a set of input data values. The invention further relates to a device for processing a set of input data values.

Background

Transform functions of different types are often used in the processing of data values. As an example, the Discrete Fourier Transform (DFT) is a versatile tool in the field of signal processing, communication and related areas. While the non discrete Fourier Transform (FT) is used to produce the whole spectral content of a signal for a continuum of frequencies the DFT evaluates the spectral content for a discrete set of frequencies, hence its name. Similarly, corresponding inverse functions, such as the Inverse DFT, are frequently used in these fields.

In software and hardware implementations of DFTs the calculations are typically organized according to a certain class of methods so as to reduce the number of costly operations such as multiplication. A DFT implementation derived in this manner is called a Fast Fourier Transform (FFT). When FFTs are implemented in hardware it is frequently in a pipelined style where the data flow through a number of stages, the data successively being modified until all required operations have been executed in a satisfactory order. The same implementations can be used for the Inverse Fast Fourier Transform (IFFT). Different architectures for pipeline FFT processors are known from e.g. US 6 098 088.

Typically, the number of transformed data values is equal to or larger than the number of input data values. Thus e.g. for a DFT the number of frequencies to evaluate the spectrum at is typically equal to or larger than the number of data samples on which the DFT is applied. There are, however, certain conditions for which it is of interest to evaluate the Fourier Transform at fewer frequencies than available data samples. A class of conditions for which this might be the case is when the useful contents of the data to transform are known to be periodic. Due to the limited frequency content of the useful part of the signal it would then be unnecessary and maybe even undesirable to evaluate the FT at more frequencies than the number of data samples in one period. A specific example is when a DFT is used for demodulation of Orthogonal Frequency Division Multiplexing (OFDM) type of signals. In this case extra data samples can be used to reduce noise and Inter Carrier Interference (ICI).

While using a pipelined FFT to evaluate a DFT for more frequency points than data samples is easy and only requires extra zero valued samples to be inserted after (and/or before) the actual data, the other case, i.e. evaluating the transform at fewer frequencies than available data samples, is less straight-forward. One solution could be to use an FFT of the size corresponding to the number of input data samples and then just disregard some of the evaluated frequency points, but that would normally not allow the remaining frequency points to be optimally placed (e.g. equidistantly) over the intended range. Further, the use of a larger FFT means that the memory requirements are increased considerably, which is a disadvantage, especially in portable equipment where memory is a scarce resource. The same problems exist for a pipelined IFFT.

ALASTI H. et al.: "A discrete multi carrier multiple access technique for wireless communications" VEHICULAR TECHNOLOGY CONFERENCE, 1988. VTC 98. 48TH IEE OTTAWA, ONT., CANADA 18-21 MAY 1998, NEW YORK, NY, USA, IEEE, US, vol. 2, 18 May 1998 (1998-05-18), pages 1533-1537 shows a discrete MultiCarrier Multiple Access (MCMA) technique for multi user wireless communication and a reduced complexity of this technique. A total of MN frequency subbands are used, i.e. N subbands for each of M users sharing the available frequency band. The reduction in complexity is made mainly because of reduction in the DFT and the IDFT frame lengths from MN points to N points, i.e. corresponding to the subbands used by one user. At the receiver the DFT output sequence is decimated in a sequence accumulator.

Therefore, it is an object of the invention to provide a method and a device in which a transform function can be evaluated at fewer output data values than available input data values without increasing the memory requirements considerably.

Summary

According to the invention, the object is achieved in a method of processing a set of input data values, the method comprising the steps of providing said input data values serially to circuitry comprising a pipelined architecture for performing a transform function of a size N which is less than the number of values in the set of input data values, wherein the transform function is either a Discrete Fourier Transform or an Inverse Discrete Fourier Transform, wherein the pipelined architecture comprises a number of serially connected stages, each stage comprising a butterfly unit and a number of memory elements, wherein the sum of all memory elements in the pipelined architecture is N-1; and an additional memory element for delaying one data value; delaying a subset of said set of input data values to obtain delayed data values by passing the input data values to be delayed through all memory elements in the pipelined architecture and through the additional memory element; providing a modified set of data values of size N by adding individual delayed data values to individual non-delayed data values from said set of input data values; and performing said transform function on said modified set of data values using said pipelined architecture to obtain a set of transformed data values of size N. By providing a modified set of data values, which is smaller (i.e. contains fewer data values) than the original set of input data values, a transform function of smaller size can be used, and further the memory requirements are reduced as the memory elements already present in the transform circuitry are re-used for delaying the subset of the input values as described.

In one embodiment the transform function is a Fast Fourier Transform. Alternatively, the transform function may be an Inverse Fast Fourier Transform.

As the transform function is performed using a pipelined architecture in a number of serially connected stages in said circuitry, each stage comprising a butterfly unit and a number of memory elements, the re-use of the memory elements in the stages of the transform circuitry for delaying some of the input data values reduces the memory requirements considerably.

In one embodiment, the memory elements of each stage constitute a First In First Out buffer.

As the method further comprises providing the modified set of data values to have the same size as the set of transformed data values, the circuitry and the memory requirements are further reduced.

In one embodiment, the method may further comprise the step of multiplying the set of input data values by a window function. Alternatively, the modified set of data values may be multiplied by the window function. The use of a window function might be useful e.g. in reception of OFDM signals, where the number of samples in the window function is typically higher than the size of the DFT.

As mentioned, the invention also relates to a device for processing a set of input data values, the device comprising circuitry arranged to receive said input data values serially, said circuitry comprising a pipelined architecture for performing a transform function of a size N which is less than the number of values in the set of input data values, wherein the transform function is either a Discrete Fourier Transform or an Inverse Discrete Fourier Transform, wherein the pipelined architecture comprises a number of serially connected stages, each stage comprising a butterfly unit and a number of memory elements, wherein the sum of all memory elements in the pipelined architecture is N-1; and an additional memory element for delaying one data value; the device being arranged to delay a subset of said set of input data values to obtain delayed data values by passing the input data values to be delayed through all memory elements in the pipelined architecture and through the additional memory element; provide a modified set of data values of size N by adding individual delayed data values to individual non-delayed data values from said set of input data values; and perform said transform function on said modified set of data values using said pipelined architecture to obtain a set of transformed data values of size N. In this way, a modified set of data values, which is smaller than the original set of input data values can be provided, and a transform function of smaller size can be used. Further, the memory requirements are reduced as the memory elements already present in the transform circuitry are re-used for delaying the subset of the input values as described.

In one embodiment the transform function is a Fast Fourier Transform. Alternatively, the transform function may be an Inverse Fast Fourier Transform.

As the circuitry for performing said transform function has a pipelined architecture with a number of serially connected stages, each stage comprising a butterfly unit and a number of memory elements, the re-use of the memory .. elements in the stages of the transform circuitry for delaying some of the input data values reduces the memory requirements considerably.

In one embodiment, the memory elements of each stage constitute a First In First Out buffer.

As the device is arranged to provide the modified set of data values to have the same size as the set of transformed data values, the circuitry and the memory requirements are further reduced.

In one embodiment, the device may further be arranged to multiply the set of input data values by a window function. Alternatively, the modified set of data values may be multiplied by the window function. The use of a window function might be useful e.g. in reception of OFDM signals, where the number of samples in the window function is typically higher than the size of the DFT.

In one embodiment, each butterfly unit has at least a shift mode and a computation mode; and the circuitry further comprises a number of counters arranged such that the mode of each butterfly unit is controlled by the output of a counter. This provides an efficient control of the circuitry.

The device may further comprise circuitry for demodulation of Orthogonal Frequency Division Multiplexing signals.

Brief Description of the Drawings

The invention will now be described more fully below with reference to the drawings, in which

Figure 1 shows a Discrete Fourier Transform of size 8,

Figure 2 shows a Discrete Fourier Transform of size 8 decomposed into two Discrete Fourier Transforms of size 4,

Figure 3 shows a complete data flow graph of a Discrete Fourier Transform of size 8,

Figure 4 shows a basic butterfly operation of a Discrete Fourier Transform,

Figure 5 shows another decomposition of a Discrete Fourier Transform of size 8 into two Discrete Fourier Transforms of size 4,

Figure 6 shows another complete data flow graph of a Discrete Fourier Transform of size 8,

Figure 7 shows another basic butterfly operation of a Discrete Fourier Transform,

Figure 8 shows a pipelined Discrete Fourier Transform of size 8,

Figure 9 shows a pipelined Discrete Fourier Transform of size 8 with folding of some time domain samples,

Figure 10 shows the circuitry of Figure 9 with control by counters, and

Figure 11 shows an example of windowing with folding.

Detailed Description of Embodiments

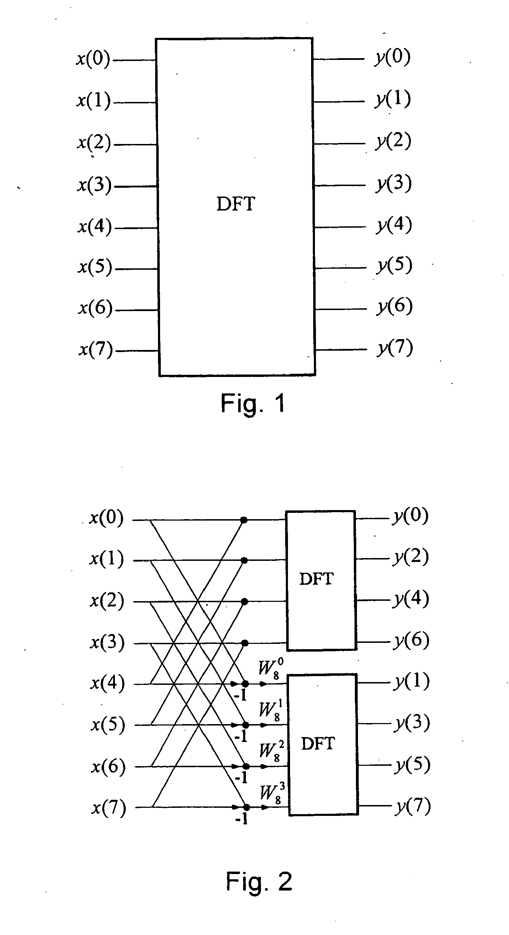

Figure 1 illustrates a Discrete Fourier Transform (DFT) of size N. Typically, the DFT will have N inputs as well as N outputs, and $N=2^M$, where M is an integer, but as will be seen in the following, this need not be the case in all situations. It is noted that the figure could just as well illustrate an inverse DFT. In Figure 1 a DFT with N=8 is shown. While no actual relations to neither time nor frequency need to exist, in the examples described below and relating to a DFT the data values or data samples to be transformed will be referred to as time (domain) data $x(n)$ whereas the transformed data will be called frequency (domain) data and written as $y(\cdot)$.
For the (not discrete) Fourier Transform the frequency domain data is defined as

$$y(f) = \sum_n x(n)e^{-j2\pi fn} ,\qquad (1)$$

where $n$ ranges over the non zero time domain samples and $f$ is the continuous frequency variable.
For a size-$N$ DFT the 1-periodic function $y(f)$ is evaluated for $N$ equidistant frequency points by letting $f=k/N$ for a succession of $N$ integers of $k$. Then

$$y(k) = \sum_n x(n)e^{-j2\pi\frac{1}{N}kn} .\qquad (2)$$

To simplify notation, the so called Twiddle Factor $W_N$ is defined as

$$W_N = e^{-j2\pi\frac{1}{N}} .\qquad (3)$$

The DFT is then expressed as

$$y(k) = \sum_n x(n) W_N^{kn} \ . \tag{4}$$

For a naive direct calculation of a DFT the asymptotic number of operations is about proportional to $N^2$. A large class of methods instead achieve complexity of type N log $N$ and a DFT implemented in this way is called a Fast Fourier Transform (FFT). The type called Decimation In Frequency (DIF), which is particularly suitable for hardware implementations, is now derived assuming there are N time domain samples.

The frequency domain samples for even frequency indices $k$

$$y(2k) = \sum_{n=0}^{N-1} x(n) W_N^{2kn} = \sum_{n=0}^{N-1} x(n) W_{N/2}^{kn} \tag{5}$$

are considered. As $W_{N/2}^{kn}$ is $N/2$-periodic in $n,$ the time domain samples $N/2$ indices apart can be summed first

$$y(2k) = \sum_{n=0}^{N/2-1} (x(n) + x(n + N/2)) W_{N/2}^{kn} \ . \tag{6}$$

It is seen that the frequency domain samples for even indices for the original DFT is obtained as all the frequency domain samples of a size-$N/2$ DFT performed on the time domain data folded to half the length.

Similarly the frequency domain samples for odd frequencies are found to be

$$y(2k+1) = \sum_{n=0}^{N/2-1} \left[ (x(n) - x(n + N/2)) W_N^n \right] W_{N/2}^{kn} \ . \tag{7}$$

The odd frequency samples of the original DFT are thus all the frequency domain samples from a size-$N/2$ DFT performed on the original time domain samples folded and multiplied by the time dependent coefficient $W_N^n$ .

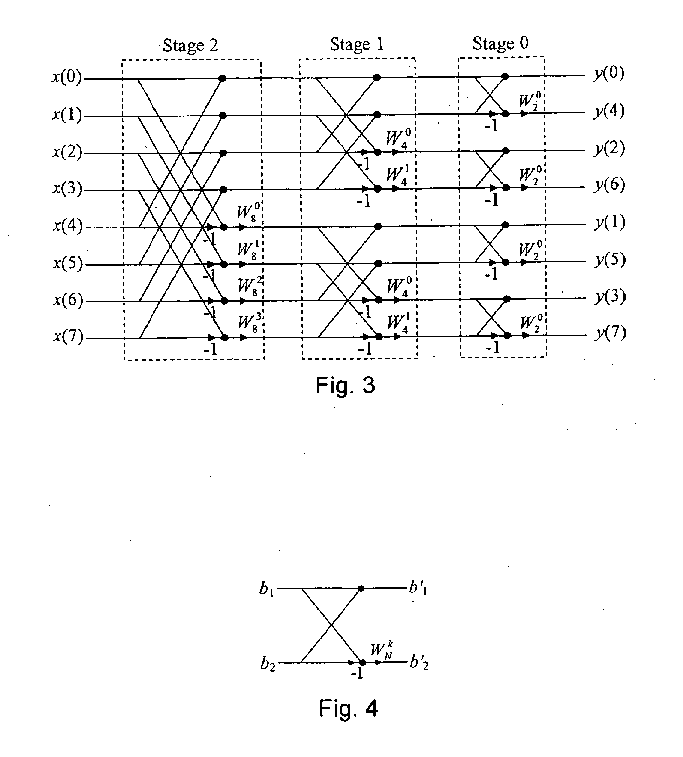

From (6) and (7) it follows that a size-N DFT can be decomposed into two size $N/2$ DFTs and some extra calculations. The data flow graph of this is shown in Figure 2. A complete DIF FFT algorithm is obtained by repeated decomposition until all the DFTs are of size $N=1,$ for which $y(0)=x(0)$. This is illustrated in Figure 3.

In Figure 3 it is seen that the complete data flow graph is built from many instances of the same basic template shown in Figure 4. Owing to its shape the template is called a butterfly, and the operation it performs a butterfly operation. The butterfly takes two input samples $b_1$ and $b_2$ and by using one addition, one subtraction and one multiplication it produces two output samples $b'_1$ and $b'_2$. The only difference between the butterflies is which twiddle factor is used in the multiplication.

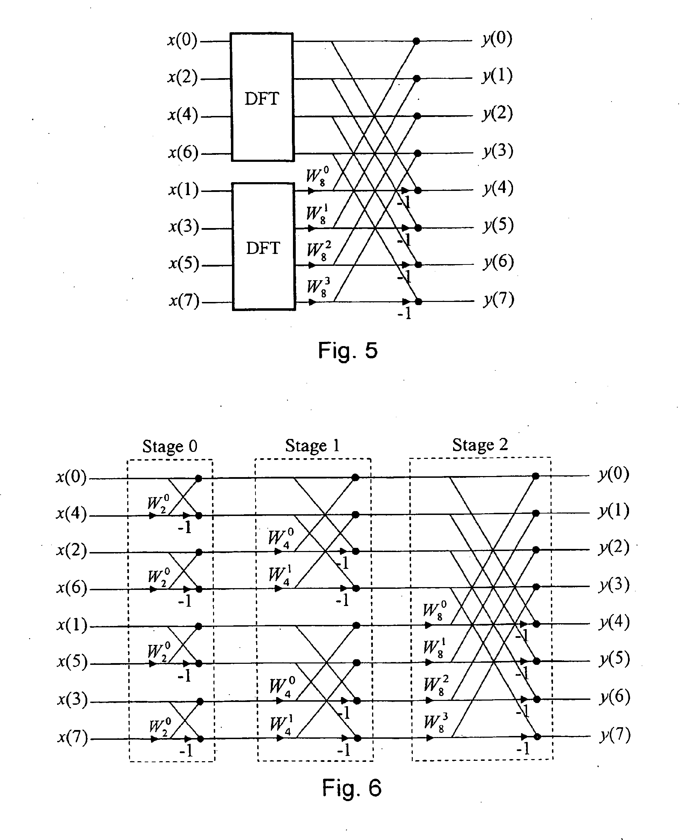

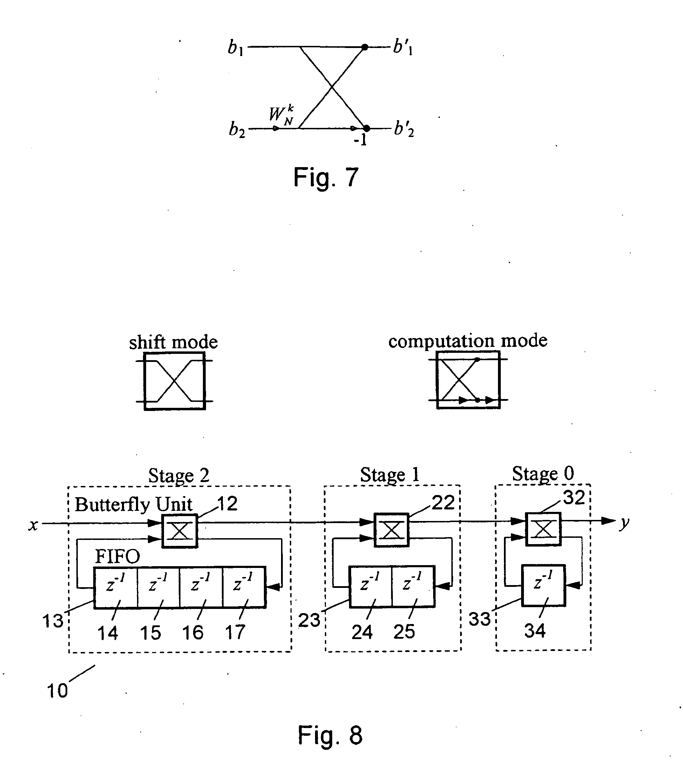

It is noted that the decomposition of a size-$N$ DFT into two size $N/2$ DFTs and some extra calculations, as an alternative to Figure 2, can be illustrated as in Figure 5, in which the two size $N/2$ DFTs are performed first, followed by the extra calculations. The complete DIF FFT algorithm obtained by repeated decomposition will then be as illustrated in Figure 6, and the butterfly operation will be as shown in Figure 7, in which the twiddle factor multiplication is performed in one of the inputs instead of one of the outputs. The following considerations are based on Figures 2 to 4, but similar considerations can be made for the butterfly operations of Figures 5 to 7 or other similar butterfly configurations.

In Figure 3 it can be observed that for a size-8 DIF FFT the data flows through $\log_2(8) = 3$ stages from left to right, and in each stage 8/2 = 4 butterfly operations are performed. Thus, a size-$N$ DIF FFT requires a total of $(N/2) \log_2(N)$ butterfly operations.

Often the time domain samples arrive serially as $x(0)$, $x(1)$ and so on. In this case it might be desirable to process the samples as they arrive. One way to do this is to calculate all butterfly operations within one stage using only a single butterfly unit with variable twiddle factor. Each stage then receives the samples serially in order (top to bottom in Figure 3 and pass on the output samples serially top to bottom. If the stages, left to right, are indexed from log2($N$)-1 down to 0, then input samples and output samples for every butterfly in stage $s$ are $D_s = 2^s$ indices apart. To produce the required pair of input samples for the butterfly, and to arrange for proper subsequent order of the outputs, stage s is augmented with a First In First Out (FIFO) buffer of size $D_s$.

During operation each stage cyclically repeats two phases. First $D_s$ samples are received and placed in the buffer (at the same time the old content of the buffer is read out). In this phase, where no butterfly operations are performed, the stage is said to be in shift mode.

In the second phase the $D_s$ samples in the buffer are paired with another $D_s$ received samples and used as inputs to the butterfly. One of the outputs from the butterfly is also output from the stage and the second output is saved in the FIFO (to be transmitted during the first phase). In this phase, when butterfly operations are performed, the stage is said to be in computation mode.

The support for the shift mode and the computation mode is collected in a two input two output butterfly unit, which either lets the data pass through or performs the butterfly operation. Figure 8 illustrates the serial connection of stages, with FIFOs and butterfly units, with constitutes the basis of a pipelined DIF FFT for the size-8 DIF FFT of Figure 3. The circuitry 10 comprises the three stages, Stage 2, Stage 1 and Stage 0. Stage 2 has the butterfly unit 12 and the FIFO buffer 13 with $D_2 = 2^2 = 4$ memory elements 14, 15, 16 and 17. Correspondingly, Stage 1 has the butterfly unit 22 and the FIFO buffer 23 with $D_1 = 2^1 = 2$ memory elements 24 and 25, and Stage 0 has the butterfly unit 32 and the FIFO buffer 33 with $D_0 = 2^0 = 1$ memory element 34.

As mentioned, the DFT will typically have N inputs as well as N outputs. However, if there are L time domain samples, where $L \geq N$, it follows, since $W_N^{kn}$ is $N$-periodic in $n$, that

$$y(k) = \sum_{n=0}^{N-1} \left( \sum_{\ell} x(n + \ell N) \right) W_N^{kn} . \tag{8}$$

where time domain samples N indices apart are summed first. It seems appropriate to call the inner summation folding of the time domain data. If the time domain data consists of exactly $N$ samples indexed from $0$ to $N-1$ the transform simply becomes

$$y(k) = \sum_{n=0}^{N-1} x(n) W_N^{kn} . \tag{9}$$

This calculation is what one normally means when referring to the DFT, and it is what most hardware and software implementations of the DFT are expected to perform.

From (8) and (9) it is concluded that one way to perform a size-$N$ DFT with $L$ time domain samples and $L \geq N$ is to first fold the sequence of time domain samples and then apply a common-or-garden size-$N$ DFT.

Thus one way to calculate a size-$N$ DFT with $L$ time domain samples $(L \geq N)$ is to first fold the sequence of time domain samples and then apply a normal size-$N$ DFT. Folding in this context means that every sample is moved within a folding range of N consecutive indices by adding a multiple of $N$ to the original index, and then all samples moved to the same index are summed. From now on the $L$ time domain samples are index as $0 \leq n < L.$ Depending on the selected folding range the result will be different, and the difference will be equivalent to a circular shift. An illustration of two different folding ranges with $N$=8 and $L$=13 time domain samples is given in Tables 1 and 2.

Table 1: Folding indices 0...12 to range 0...7

|   | | | | | | | | |
|---|---|---|---|---|---|---|---|---|
| | $x(8)$ | $x(9)$ | $x(10)$ | $x(11)$ | $x(12)$ | | | |
| + | $x(0)$ | $x(1)$ | $x(2)$ | $x(3)$ | $x(4)$ | $x(5)$ | $x(6)$ | $x(7)$ |

Table 2: Folding indices 0...12 to range 5...12

|   | | | | | | | | |
|---|---|---|---|---|---|---|---|---|
| | | | | $x(0)$ | $x(1)$ | $x(2)$ | $x(3)$ | $x(4)$ |
| + | $x(5)$ | $x(6)$ | $x(7)$ | $x(8)$ | $x(9)$ | $x(10)$ | $x(11)$ | $x(12)$ |

Table 1 and Table 2 represent two extreme selections for the folding range. In Table 1 the N leftmost (lowest) indices of the time domain samples are selected, and in Table 2 the N rightmost (highest) indices are selected. For a pipelined FFT, where the input samples arrive serially (lower to higher indices) the second alternative is clearly the most attractive as the processing can begin when sample $x(5)$ arrives, and when sample $x(8)$ arrives sample $x(0)$ has arrived earlier and could be available to be added to $x(8)$. The first alternative is less attractive since it would be necessary to wait N samples for sample $x(8)$ to arrive (and then add it with sample $x(0)$). In general, due to the direction of time, it is more effective to fold to the right, that is, push old samples to the right in steps of $N$ as new samples arrive. The pipelined DIF FFT as described herein has the ability to fold the $L-N$ *samples* with lowest indices to the range of the $N$ highest indices and then perform a DFT.

From Table 2 it is seen that when sample $x(8)$ arrives it is required to somehow produce sample $x(0)$, arrived earlier. And when sample $x(9)$ arrives it is required to have $x(1)$ available. Generally, when sample $x(n)$ arrives it is required to have sample $x(n-N)$ available (if there is any such sample). An ordinary size-N FIFO can be used, but this is tantamount to extra memory. On the other hand, as illustrated in Figure 8 the sum of all FIFOs in a size-N DIF FFT is

$$\sum_{s=0}^{\log_2(N)-1} D_s = \sum_{s=0}^{\log_2(N)-1} 2^s = 2^{\log_2(N)} - 1 = N - 1. \qquad (10)$$

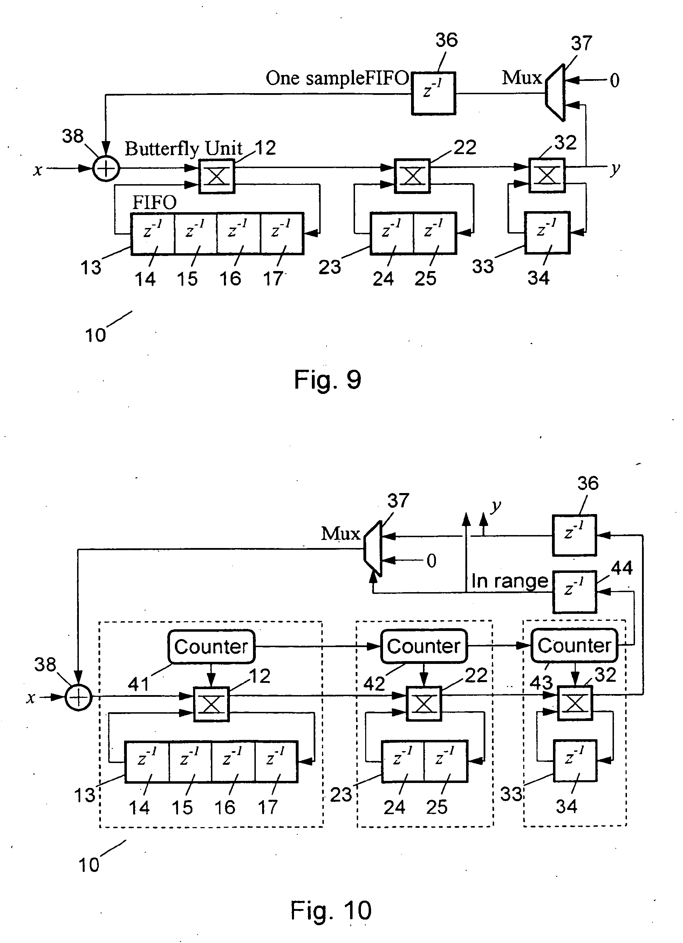

Thus, with just one extra memory element in addition to those already present in the FIFOs, it is possible to create the required delay. This is illustrated in Figure 9 for N = 8. The samples to be delayed must then pass through all the FIFOs 13, 23 and 33 in the FFT, a one sample FIFO 36, and then be fed back to the input of the FFT and added to currently arriving samples in an adder 38. This will introduce a third phase during which a stage operates in shift mode for the purpose of delaying any of the initial $L-N$ samples. A mechanism to select whether or not samples should be fed back and added with the arriving sample is also used. A simple approach is to select in a multiplexer 37 either the output from the last FFT stage or zero as use for feedback. The described structure, depicted in Figure 9, is henceforth called a folding pipelined DIF FFT.

The operation of a pipelined DIF FFT proceeds in cycles. In this context a cycle is only to mean that each block receives one sample on each of its inputs and produces one sample on each of its outputs. For each cycle the control signals must be set correctly for the mux 37 and the butterfly units (shift mode or computation mode, and which Twiddle Factor to use) in different stages. As long as the number of time domain samples $L$ does not change, the values of the control signals necessarily repeat every $L$ cycles.

Table 3 shows shift mode (o), or computation mode (x) for a non folding size-8 pipelined DIF FFT. ν index the cycles within an iteration of the stage. An arrow shows when sample index 0 arrives to a given stage from the previous stage. The input index n is shown in binary notation in parenthesis. Table 3 shows how the mode for each stage is selected for a regular non folding size-8 DIF FFT during 2 · 8 cycles. The 8 possible samples going into a stage (0... 8-1, top to bottom in Figure 3) are indexed by ν.

Table 3

| | Stage 2 | | Stage 1 | | Stage 0 | |
|---|---|---|---|---|---|---|
| $n$ | ν | mode | ν | mode | ν | mode |
| 0(000) | 0 | o | 4 | o | 2 | o |
| 1(001) | 1 | o | 5 | o | 3 | x |
| 2(010) | 2 | o | 6 | x | 4 | o |
| 3(011) | 3 | o | 7 | x | 5 | x |
| 4(100) | 4 | x → | 0 | o | 6 | o |
| 5(101) | 5 | x | 1 | o | 7 | x |
| 6(110) | 6 | x | 2 | x → | 0 | o |
| 7(111) | 7 | x | 3 | x | 1 | x |
| 0(000) | 0 | o | 4 | o | 2 | o |
| 1(001) | 1 | o | 5 | o | 3 | x |
| 2(010) | 2 | o | 6 | x | 4 | o |
| 3(011) | 3 | o | 7 | x | 5 | x |
| 4(100) | 4 | x → | 0 | o | 6 | o |

(continued)

|     | Stage 2 |      | Stage 1 |      | Stage 0 |      |
|-----|---------|------|---------|------|---------|------|
| $n$ | $\nu$   | mode | $\nu$   | mode | $\nu$   | mode |
| 5(101) | 5    | x    | 1       | o    | 7       | x    |
| 6(110) | 6    | x    | 2       | x →  | 0       | o    |
| 7(111) | 7    | x    | 3       | x    | 1       | x    |

The continuous set of cycles for which a stage receives all samples $0 \le \nu < N$ will be called an iteration of that stage. It can be observed that the cycle in which a stage is in computation mode the first time in an iteration is the same cycle as that in which the next stage receives its sample $\nu = 0$, i.e. the first cycle in an iteration of that stage. For example, the first cycle stage 2 is in computation mode (in that iteration) is when $n = 4$, in the same cycle stage 1 receives its sample $\nu = 0$. And in the same way, when $n=6$ stage 1 is in computation mode the first time (in that iteration) and stage 0 receives its sample $\nu=0$.

With the non folding pipelined DIF FFT there is a simple way to control the modes of the individual butterfly units by means of the index $n$ of the arriving time domain sample. Specifically bit b in the binary representation of $n$ can directly control stage $b$ if 0 implies shift mode and 1 implies computation mode, as will appear from Table 3. A single binary counter is thus sufficient to set the corrected mode of all butterfly units in a non folding pipelined DIF FFT.

For a size-8 folding pipelined DIF FFT with $L$=13 time domain samples the correct modes for the butterfly units are given in Table 4.

Table 4 shows shift mode (o/o̲), or computing mode (x) for a size-8 folding pipelined DIF FFT with $L$=13. Mode o̲ means that the stage is shifting in the samples to be fed back. $\nu$ index the cycles within an iteration of the stage, indices $N \le \nu < L$ is used for samples to be fed back. An arrow shows when sample index 0 arrives to a given stage from the previous stage. The input index $n$ is shown in binary notation in parenthesis.

The pattern of modes for the butterfly units is the same, except that between every iteration $L$-$N$ extra shift modes have been inserted. The extra $L$-$N$ samples (having no counterpart in Figure 3) have been indexed $N \le \nu < L$. Analogous with the non folding FFT, the continuous set of cycles for which a stage receives all samples $0 \le \nu < L$ will be called an iteration of that stage, but it should be observed that indices $N \le \nu < L$ really go together with indices $0 \le \nu < N$ in the ensuing iteration.

Table 4

|    | $n$     | Stage 2 |      | Stage 1 |      | Stage 0 |      |
|----|---------|---------|------|---------|------|---------|------|
|    |         | $\nu$   | mode | $\nu$   | mode | $\nu$   | mode |
| 0  | (0000)  | (8)     | o̲    | 4       | o    | 2       | o    |
| 1  | (0001)  | (9)     | o̲    | 5       | o    | 3       | x    |
| 2  | (0010)  | (10)    | o̲    | 6       | x    | 4       | o    |
| 3  | (0011)  | (11)    | o̲    | 7       | x    | 5       | x    |
| 4  | (0100)  | (12)    | o̲    | (8)     | o̲    | 6       | o    |
| 5  | (0101)  | 0       | o    | (9)     | o̲    | 7       | x    |
| 6  | (0110)  | 1       | o    | (10)    | o̲    | (8)     | o̲    |
| 7  | (0111)  | 2       | o    | (11)    | o̲    | (9)     | o̲    |
| 8  | (1000)  | 3       | o    | (12)    | o̲    | (10)    | o̲    |
| 9  | (1001)  | 4       | x →  | 0       | o    | (11)    | o̲    |
| 10 | (1010)  | 5       | x    | 1       | o    | (12)    | o̲    |
| 11 | (1011)  | 6       | x    | 2       | x →  | 0       | o    |
| 12 | (1100)  | 7       | x    | 3       | x    | 1       | x    |
| 0  | (0000)  | (8)     | o̲    | 4       | o    | 2       | o    |
| 1  | (0001)  | (9)     | o̲    | 5       | o    | 3       | x    |
| 2  | (0010)  | (10)    | o̲    | 6       | x    | 4       | o    |
| 3  | (0011)  | (11)    | o̲    | 7       | x    | 5       | x    |
| 4  | (0100)  | (12)    | o̲    | (8)     | o̲    | 6       | o    |
| 5  | (0101)  | 0       | o    | (9)     | o̲    | 7       | x    |
| 6  | (0110)  | 1       | o    | (10)    | o̲    | (8)     | o̲    |

(continued)

|  | | Stage 2 | | Stage 1 | | Stage 0 | |
|---|---|---|---|---|---|---|---|
|  | *n* | ν | mode | ν | mode | ν | mode |
| 7 | (0111) | 2 | o | (11) | o (9) |  | o |
| 8 | (1000) | 3 | o | (12) | o | (10) | o |
| 9 | (1001) | 4 | x → | 0 | o | (11) | o |
| 10 | (1010) | 5 | x | 1 | o | (12) | o |
| 11 | (1011) | 6 | x | 2 | x → | 0 | o |
| 12 | (1100) | 7 | x | 3 | x | 1 | x |

While the insertion of extra shift mode cycles annihilates the simple single-counter-method to control the butterfly units, the fact that the first computation mode cycle for one stage is the same as the first cycle in the iteration of the next stage still holds. One approach, which is illustrated in Figure 10, is to augment each stage with a separate counter corresponding to the ν-index, capable of counting from 0 to *L*-1. Thus counters 41, 42 and 43 are shown in Figure 10. To establish correct phases of the counters each stage asserts a signal to reset the counter in the next stage when it enters the first computation mode cycle. The mux 37 should provide zero valued feedback for those samples of stage 0 corresponding to $0 \leq \nu < N$, something readily obtained by a single cycle delay 44 (to compensate for the single cycle delay 36 of the data) of a signal asserted when the counter 43 is in that range. The same signal is then also useful to tell which samples are the actual useful outputs of the FFT. Figure 10 illustrates the basic structure of the described arrangement.

In some applications it might be desirable to multiply the time domain samples with a window (weight) function *w*(*n*) before the DFT is applied. The frequency domain samples is then

$$y(k) = \sum_n w(n)x(n)W_N^{kn} . \qquad (11)$$

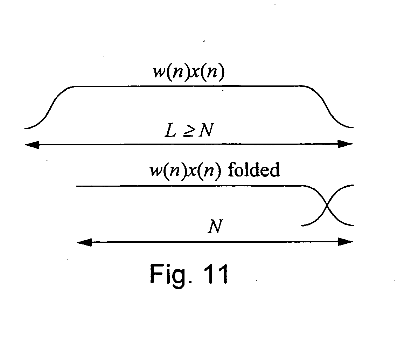

A specific application where the use of a window function might be useful is reception of OFDM signals. In this case the number of non-zero samples in the window function is $L \geq N$, and thus the invention is directly applicable. Figure 11 illustrates how the folding FFT processor folds the weighted time domain samples *w*(*n*)*x*(*n*) before the FFT is applied. This is also a graphical version of the folding process illustrated in Table 2. In Figure 11, the original time domain signal x(n) is constant as to elucidate the window function w(n). As an alternative to multiplying the time domain samples, i.e. the input data values, by the window function, it is also possible that the modified or folded data values (i.e. the sum of non delayed and delayed samples) are multiplied by the window function.

It is noted that the Inverse DFT (or FFT) has the same form as the DFT (or FFT), except that the conjugate Twiddle Factor replaces the Twiddle Factor and that a scaling factor 1/*N* is used. Thus the computations for the IFFT are essentially the same as for the FFT, and therefore the ideas described above are also applicable for the Inverse Fourier Transforms.

Although various embodiments of the present invention have been described and shown, the invention is not restricted thereto, but may also be embodied in other ways within the scope of the subject-matter defined in the following claims.

**Claims**

1.   A method of processing a set of input data values, the method comprising the steps of:

    • providing said input data values serially to circuitry (10) comprising

        o a pipelined architecture for performing a transform function of a size N which is less than the number of values in the set of input data values, wherein the transform function is either a Discrete Fourier Transform or an Inverse Discrete Fourier Transform, wherein the pipelined architecture comprises a number of serially connected stages, each stage comprising a butterfly unit (12; 22; 32) and a number of memory elements (14, 15, 16, 17, 24, 25, 34), wherein the sum of all memory elements in the pipelined architecture is N-1; and
        o an additional memory element (36) for delaying one data value;

• delaying a subset of said set of input data values to obtain delayed data values by passing the input data values to be delayed through all memory elements (14, 15, 16, 17, 24, 25, 34) in the pipelined architecture and through the additional memory element (36);

• providing a modified set of data values pf size N by adding individual delayed data values to individual non-delayed data values from said set of input data values; and

• performing said transform function on said modified set of data values using said pipelined architecture to obtain a set of transformed data values of size N.

2. A method according to claim 1, **characterized in that** said transform function is a Fast Fourier Transform.

3. A method according to claim 1, **characterized in that** said transform function is an Inverse Fast Fourier Transform.

4. A method according to any one of claims 1 to 3, **characterized in that** the memory elements (14, 15, 16, 17; 24, 25; 34) of each stage constitute a First In First Out buffer (13; 23; 33).

5. A method according to any one of claims 1 to 4, **characterized in that** the method further comprises the step of multiplying the set of input data values by a window function.

6. A device for processing a set of input data values, the device comprising circuitry (10) arranged to receive said input data values serially, said circuitry (10) comprising:

• a pipelined architecture for performing a transform function of a size N which is less than the number of values in the set of input data values, wherein the transform function is either a Discrete Fourier Transform or an Inverse Discrete Fourier Transform, wherein the pipelined architecture comprises a number of serially connected stages, each stage comprising a butterfly unit (12; 22; 32) and a number of memory elements (14, 15, 16, 17, 24, 25, 34), wherein the sum of all memory elements in the pipelined architecture is N-1; and

• an additional memory element (36) for delaying one data value; the device being arranged to:

• delay a subset of said set of input data values to obtain delayed data values by passing the input data values to be delayed through all memory elements (14, 15, 16, 17, 24, 25, 34) in the pipelined architecture and through the additional memory element (36);

• provide a modified set of data values of size N by adding individual delayed data values to individual non-delayed data values from said set of input data values; and

• perform said transform function on said modified set of data values using said pipelined architecture to obtain a set of transformed data values of size N.

7. A device according to claim 6, **characterized in that** said transform function is a Fast Fourier Transform.

8. A device according to claims 6, **characterized in that** said transform function is an Inverse Fast Fourier Transform.

9. A device according to any one of claims 6 to 8, **characterized in that the** memory elements (14, 15, 16, 17; 24, 25; 34) of each stage constitute a First In First Out buffer (13; 23; 33).

10. A device according to any one of claims 6 to 9, **characterized in that** the device is further arranged to multiply the set of input data values by a window function.

11. A device according to any one of claims 6 to 10, **characterized in that** each butterfly unit (12, 22, 32) has at least a shift mode and a computation mode; and **in that** the circuitry (10) further comprises a number of counters (41, 42, 43) arranged such that the mode of each butterfly unit (12, 22, 32) is controlled by the output of a counter.

12. A device according to any one of claims 6 to 11, **characterized in that** the device further comprises circuitry for demodulation of Orthogonal Frequency Division Multiplexing signals.

**Patentansprüche**

1. Verfahren zum Verarbeiten einer Gruppe von Eingabedatenwerten, wobei das Verfahren die Schritte umfasst:

serielles Bereitstellen der Eingabedatenwerte an Schaltkreise (10), welche umfassen

eine Pipeline-Architektur zum Ausführen einer Transformationsfunktion einer Größe N, welche geringer ist als die Anzahl von Werten in der Gruppe von Eingabedatenwerten, wobei die Transformationsfunktion entweder eine Diskrete Fourier-Transformation oder eine Inverse Diskrete Fourier-Transformation ist, wobei die Pipeline-Architektur eine Anzahl von seriell verbundenen Stufen umfasst, wobei jede Stufe eine Butterfly-Einheit (12; 22; 32) und eine Anzahl von Speicherelementen (14, 15, 16, 17, 24, 25, 34) umfasst, wobei die Summe aller Speicherelemente in der Pipeline-Architektur N-1 ist; und

ein zusätzliches Speicherelement (36) zum Verzögern eines Datenwertes;

Verzögern einer Untergruppe der Gruppe von Eingabedatenwerten, um verzögerte Datenwerte zu erhalten, indem die zu verzögernden Eingabedatenwerte durch alle Speicherelemente (14, 15, 16, 17, 24, 25, 34) in der Pipeline-Architektur geführt werden und durch das zusätzliche Speicherelement (36);

Bereitstellen einer modifizierten Gruppe von Datenwerten der Größe N durch Hinzufügen von individuellen verzögerten Datenwerten zu individuellen nicht verzögerten Datenwerten von der Gruppe von Eingabedatenwerten; und

Ausführen der Transformationsfunktion auf der modifizierten Gruppe von Datenwerten, wobei die Pipeline-Architektur genutzt wird, um eine Gruppe von transformierten Datenwerten der Größe N zu erhalten.

2. Verfahren nach Anspruch 1, **gekennzeichnet dadurch, dass** die Transformationsfunktion eine Schnelle Fourier-Transformation ist.

3. Verfahren nach Anspruch 1, **gekennzeichnet dadurch, dass** die Transformationsfunktion eine Inverse Schnelle Fourier-Transformation ist.

4. Verfahren nach einem der Ansprüche 1 bis 3, **gekennzeichnet dadurch, dass** die Speicherelemente (14, 15, 16, 17; 24, 25; 34) jeder Stufe einen First-in-First-out-Puffer (13; 23; 33) bilden.

5. Verfahren nach einem der Ansprüche 1 bis 4, **gekennzeichnet dadurch, dass** das Verfahren ferner den Schritt des Multiplizieren einer Gruppe von Eingabedatenwerten mit einer Fensterfunktion umfasst.

6. Einrichtung zum Verarbeiten einer Gruppe von Eingabedatenwerten, wobei die Einrichtung Schaltkreise (10) umfasst, welche eingerichtet sind, die Eingabedatenwerte seriell zu empfangen, wobei die Schaltkreise (10) umfassen:

eine Pipeline-Architektur für das Ausführen einer Transformationsfunktion einer Größe N, welche geringer ist als die Anzahl von Werten in der Gruppe der Eingabedatenwerte, wobei die Transformationsfunktion entweder eine Diskrete Fourier-Transformation oder eine Inverse Diskrete Fourier-Transformation ist, wobei die Pipeline-Architektur eine Anzahl von seriell verbundenen Stufen umfasst, wobei jede Stufe eine Butterfly-Einheit (12; 22; 32) und eine Anzahl von Speicherelementen (14, 15, 16, 17, 24, 25, 34) umfasst, wobei die Summe aller Speicherelemente in der Pipeline-Architektux N-1 ist; und

ein zusätzliches Speicherelement (36) zur Verzögerung eines Datenwertes;

wobei die Einrichtung dazu eingerichtet ist:

eine Untergruppe der Gruppe von Eingabedatenwerten zu verzögern, um verzögerte Datenwerte zu erhalten, indem die zu verzögernden Datenwerte durch alle Speicherelemente (14, 15, 16, 17, 24, 25, 34) in der Pipeline-Architektur geführt werden und durch das zusätzliche Speicherelement (36);

eine modifizierte Gruppe von Eingabedatenwerten der Größe N bereitzustellen, indem individuelle verzögerte Datenwerte zu individuellen nicht verzögerten Datenwerten von der Gruppe von Eingabedatenwerten hinzugefügt werden; und

die Transformationsfunktion auf der modifizierten Gruppe von Datenwerten auszuführen, wobei die Pipeline-Architektur genutzt wird, um ein Set von transformierten Datenwerten der Größe N zu erhalten.

7. Einrichtung nach Anspruch 6, **gekennzeichnet dadurch, dass** die Transformationsfunktion eine Schnelle Fourier-Transformation ist.

8. Einrichtung nach Anspruch 6, **gekennzeichnet dadurch, dass** die Transformationsfunktion eine Inverse Schnelle Fourier-Transformation ist.

9. Einrichtung nach einem der Ansprüche 6 bis 8, **gekennzeichnet dadurch, dass** die Speicherelemente (14, 15, 16, 17; 24, 25; 34) jeder Stufe einen First-in-First-out-Puffer (13; 23; 33) bilden.

**10.** Einrichtung nach einem der Ansprüche 6 bis 9, **gekennzeichnet dadurch, dass** die Einrichtung ferner eingerichtet ist, die Gruppe von Eingabedatenwerten mit einer Fensterfunktion zu multiplizieren.

**11.** Einrichtung nach einem der Ansprüche 6 bis 10, **gekennzeichnet dadurch, dass** jede Butterfly-Einheit (12, 22, 32) wenigstens einen Schiebemodus und einen Berechnungsmodus hat; und **dadurch**, dass die Schaltkreise (10) ferner eine Anzahl von Zählern (41, 42, 43) umfassen, welche derart eingerichtet sind, dass der Modus jeder Butterfly-Einheit (12, 22, 32) durch die Ausgabe eines Zählers gesteuert wird.

**12.** Einrichtung nach einem der Ansprüche 6 bis 11, **gekennzeichnet dadurch, dass** die Einrichtung ferner Schaltkreise zur Demodulation von Orthogonal-Frequenz-Multiplex-Signalen umfasst.


**Revendications**

**1.** Procédé de traitement d'un ensemble de valeurs de données d'entrée, le procédé comprenant les étapes qui consistent à :

fournir lesdites valeurs de données d'entrée en série à une circuiterie (10) comprenant :

une architecture en pipeline pour exécuter une fonction de transformée d'une taille N qui est inférieure au nombre de valeurs dans l'ensemble de valeurs de données d'entrée, où la fonction de transformée est soit une Transformée de Fourier Discrète ou une Transformée de Fourier Discrète Inverse, où l'architecture en pipeline comprend un nombre d'étages connectés en série, chaque étage comprenant une unité papillon (12 ; 22 ; 32) et un nombre d'éléments de mémoire (14, 15, 16, 17, 24, 25, 34), où la somme de tous les éléments de mémoire dans l'architecture en pipeline est de N-1 ; et

un élément de mémoire (36) supplémentaire pour retarder une valeur de données ; retarder un sous-ensemble dudit ensemble de valeurs de données d'entrée pour obtenir des valeurs de données différées en faisant passer les valeurs de données d'entrée à retarder à travers tous les éléments de mémoire (14, 15, 16, 17, 24, 25, 34) dans l'architecture en pipeline et à travers l'élément de mémoire (36) supplémentaire ;

fournir un ensemble modifié de valeurs de données de taille N en ajoutant des valeurs de données différées individuelles à des valeurs de données non différées individuelles à partir dudit ensemble de valeurs de données d'entrée ; et

exécuter ladite fonction de transformée sur ledit ensemble modifié de valeurs de données en utilisant ladite architecture en pipeline afin d'obtenir un ensemble de valeurs de données transformées de taille N.

**2.** Procédé selon la revendication 1, **caractérisé en ce que** ladite fonction de transformée est une Transformée de Fourier Rapide.

**3.** Procédé selon la revendication 1, **caractérisé en ce que** ladite fonction de transformée est une Transformée de Fourier Inverse.

**4.** Procédé selon l'une quelconque des revendications 1 à 3, **caractérisé en ce que** les éléments de mémoire (14, 15, 16, 17 ; 24, 25 ; 34) de chaque étage constituent une mémoire tampon (13 ; 23 ; 33) de type Premier Entré Premier Sorti.

**5.** Procédé selon l'une quelconque des revendications 1 à 4, **caractérisé en ce que** le procédé comprend en outre l'étape qui consiste à multiplier l'ensemble de valeurs de données d'entrée par une fonction fenêtre.

**6.** Dispositif pour le traitement d'un ensemble de valeurs de données d'entrée, le dispositif comprenant une circuiterie (10) agencée pour recevoir lesdites valeurs de données d'entrée en série, ladite circuiterie (10) comprenant :

une architecture en pipeline pour exécuter une fonction de transformée d'une taille N qui est inférieure au nombre de valeurs dans l'ensemble des valeurs de données d'entrée, où la fonction de transformée est soit une Transformée de Fourier Discrète ou une Transformée de Fourier Discrète Inverse, où l'architecture en pipeline comprend un nombre d'étages connectés en série, chaque étage comprenant une unité papillon (12 ; 22 ; 32) et un nombre d'éléments de mémoire (14, 15, 16, 17, 24, 25, 34), où la somme de tous les éléments de mémoire dans l'architecture en pipeline est de N-1 ; et

un élément de mémoire (36) supplémentaire pour retarder une valeur de donnée ; le dispositif étant agencé pour :

retarder un sous-ensemble dudit ensemble de valeurs de données d'entrée afin d'obtenir des valeurs de données différées en faisant passer les valeurs de données d'entrée à retarder à travers tous les éléments de mémoire (14, 15, 16, 17, 24, 25, 34) dans l'architecture en pipeline et à travers l'élément de mémoire (36) supplémentaire ;

fournir un ensemble modifié de valeurs de données de taille N en ajoutant des valeurs de données différées individuelles à des valeurs de données non différées individuelles à partir dudit ensemble de valeurs de données d'entrée ; et

exécuter ladite fonction de transformée sur ledit ensemble modifié de valeurs de données en utilisant ladite architecture en pipeline afin d'obtenir un ensemble de valeurs de données transformées de taille N.

7.  Dispositif selon la revendication 6, **caractérisé en ce que** ladite fonction de transformée est une Transformée de Fourier Rapide.

8.  Dispositif selon la revendication 6, **caractérisé en ce que** ladite fonction de transformée est une Transformée de Fourier Rapide Inverse.

9.  Dispositif selon l'une quelconque des revendications 6 à 8, **caractérisé en ce que** les éléments de mémoire (14, 15, 16, 17 ; 24, 25 ; 34) de chaque étage constituent une mémoire tampon (13 ; 23 ; 33) de type Premier Entré Premier Sorti.

10. Dispositif selon l'une quelconque des revendications 6 à 9, **caractérisé en ce que** le dispositif est en outre agencé pour multiplier l'ensemble de valeurs de données d'entrée par une fonction fenêtre.

11. Dispositif selon l'une quelconque des revendications 6 à 10, **caractérisé en ce que**

chaque unité papillon (12, 22, 32) a au moins un mode de décalage et un mode de calcul ; et **en ce que** la circuiterie (10) comprend en outre

un nombre de compteurs (41, 42, 43) agencés de sorte que le mode de chaque unité papillon (12, 22, 32) soit commandé par la sortie d'un compteur.

12. Dispositif selon l'une quelconque des revendications 6 à 11, **caractérisé en ce que** le dispositif comprend en outre une circuiterie pour la démodulation de signaux à multiplexage par répartition orthogonale de la fréquence.

Fig. 1

Fig. 2

Fig. 3

Fig. 4

Fig. 5

Fig. 6

16

Fig. 7

Fig. 8

Fig. 9

Fig. 10

$$w(n)x(n)$$

$$L \geq N$$

$$w(n)x(n) \text{ folded}$$

$$N$$

## Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6098088 A

**Non-patent literature cited in the description**

- **ALASTI H. et al.** A discrete multi carrier multiple access technique for wireless communications. *VEHICULAR TECHNOLOGY CONFERENCE,* 18 May 1998, vol. 2, 1533-1537